# FASCICULE DE BREVET EUROPEEN

(11) **EP 2 703 146 B1**
(45) Date de publication et mention de la délivrance du brevet: **12.08.2015**
(21) Numéro de dépôt: 13180959.2
(22) Date de dépôt: 20.08.2013
(51) Int. Cl.: B29C 49/48, B29C 49/28

(54) **Procédé de refroidissement d'un moule par circulation d'un fluide caloporteur au contact de sa face externe**
Abkühlungsverfahren einer Form durch Zirkulation einer Wärmeübertragungsflüssigkeit in Kontakt mit der Außenseite der Form
Method for cooling a mould by circulating a heat-transfer fluid in contact with the external face thereof

(30) Priorité: 28.08.2012 FR 1258026
(43) Date de publication de la demande: 05.03.2014
(73) Titulaire: SIDEL PARTICIPATIONS, 76930 Octeville-sur-Mer (FR)
(72) Inventeur: Lepechour, Anthony, 76930 Octeville sur Mer (FR); Fouet, Laurent, 76930 Octeville sur Mer (FR)
(74) Mandataire: Gevers France

(56) Documents cités:
- WO-A2-2012/096820
- US-A1- 2011 165 285

## Description

L'invention concerne un procédé de refroidissement d'un moule chauffé d'un dispositif de moulage de récipients en matériau thermoplastique par soufflage.

L'invention concerne plus particulièrement un procédé de refroidissement d'un moule chauffé d'un dispositif de moulage de récipients en matériau thermoplastique par soufflage, le dispositif comportant :
- un moule présentant une face interne qui délimite une cavité de moulage et qui comporte une face externe qui entoure la cavité de moulage ;
- des moyens de chauffage du moule à une température déterminée qui sont désactivés lors de la mise en oeuvre du procédé de refroidissement. Un procédé apparenté est décrit dans le document US 2011 /165 285 A1.

De manière connue, les dispositifs de moulage de ce type permettent de réaliser des récipients, tels que des bouteilles, à partir de préformes en matériau thermoplastique. Les préformes sont préalablement chauffées à une température de transition vitreuse afin de les rendre suffisamment malléables. La préforme ainsi chauffée est insérée dans la cavité de moulage, puis une tuyère de soufflage injecte un fluide de formage sous pression, généralement de l'air, dans la préforme afin que les parois de cette dernière viennent épouser l'empreinte délimitée par la cavité de moulage.

Lorsque les récipients en plastique doivent être remplis avec un liquide chaud, un récipient moulé à une température ambiante risque de se rétracter et de déformer le récipient. Pour éviter ce phénomène de rétractation, le moule doit être chauffé à une température déterminé, par exemple entre 130°C et 180°C, lors de l'opération de moulage afin de conférer au matériau plastique constituant le récipient une structure résistante à la chaleur.

Différents moyens de chauffage du moule sont déjà connus. Il est ainsi connu de chauffer le moule au moyen d'un circuit fluidique qui est réalisé dans l'épaisseur du moule. Un fluide caloporteur chaud alimente le circuit afin de chauffer le moule.

Il est aussi connu d'agencer des résistances électriques chauffantes dans l'épaisseur du moule afin de chauffer électriquement le moule.

Certaines opérations nécessitent qu'un opérateur manipule le moule. C'est par exemple le cas lors d'une opération de changement de format de récipient à fabriquer. L'opérateur ne peut cependant pas manipuler le moule encore chaud et il n'est pas rentable d'attendre que le moule refroidisse passivement, immobilisant ainsi toutes la chaîne de production.

Pour résoudre ce problème, il est connu d'utiliser des moyens de refroidissement du moule.

Ainsi, lorsque le moule est chauffé par un circuit de fluide caloporteur chaud, on a déjà proposé de remplacer temporairement le fluide caloporteur chaud par du fluide caloporteur froid. Un tel procédé permet de refroidir rapidement le moule.

La fabrication d'un moule équipé d'un circuit de fluide caloporteur dédié au refroidissement est très onéreuse et complexe à réaliser du fait de la présence des résistances de chauffage dans l'épaisseur du moule.

L'invention propose un procédé de refroidissement du type décrit précédemment, **caractérisé en ce que** le moule est refroidi par circulation d'un fluide caloporteur froid directement au contact de sa face externe.

Selon d'autres caractéristiques du procédé :
- le fluide caloporteur est formé par un gaz sous pression qui subit une détente en circulant contre la face externe du moule ;
- les moyens de chauffage sont formés par des résistances électriques qui sont interposées dans l'épaisseur du moule entre la cavité de moulage et la face externe.

L'invention propose aussi un dispositif de moulage pour la mise en oeuvre du procédé selon les enseignements de l'invention, dans lequel :
- le moule est formé par la jonction de deux demi-moules comportant chacun une face de jonction dans laquelle est formée une partie de la cavité de moulage, et une face externe opposée formant une partie de la face externe du moule ;
- chaque demi-moule est fixé dans un logement d'un support associé avec réservation d'un espace libre entre le fond du logement et la face externe du demi-moule ;
**caractérisé en ce que** le dispositif de moulage comporte au moins une conduite d'alimentation commandée en fluide caloporteur qui débouche dans l'espace libre pour permettre la circulation du fluide caloporteur entre la face externe du demi-moule et le fond du logement.

Selon d'autres caractéristiques du dispositif :
- l'espace libre est ouvert sur l'atmosphère de manière à permettre l'évacuation du fluide caloporteur ;
- la conduite d'alimentation débouche dans le fond du logement ;
- la conduite d'alimentation comporte plusieurs orifices débouchant dans le fond du logement, les orifices étant répartis sur ledit fond ;
- la conduite d'alimentation est réalisée dans l'épaisseur du support.

D'autres caractéristiques et avantages apparaitront au cours de la lecture de la description détaillée qui va suivre pour la compréhension de laquelle on se reportera aux dessins annexés parmi lesquels :
- la figure 1 est une vue en perspective qui représente un moule d'un dispositif de moulage réalisé selon les enseignements de l'invention ;
- la figure 2 est une vue en perspective qui représente un dispositif de moulage réalisé selon les enseignements de l'invention et comportant un demi-moule qui est monté dans un support associé ;
- la figure 3 est une vue en perspective éclatée qui représente le demi-moule de la figure 2 et son support ;
- la figure 4 est une vue en coupe verticale selon le plan de coupe 4-4 de la figure 2 qui représente l'espace réservé entre le moule et son logement dans le support ;
- la figure 5 est une vue en coupe horizontale selon le plan de coupe 5-5 de la figure 2 qui représente des orifices débouchant de la conduite d'alimentation ;
- la figure 6 est une vue en coupe selon le plan de coupe 6-6 de la figure 5 qui représente la conduite d'alimentation qui s'étend dans l'épaisseur du support.

Dans la suite de la description, des éléments présentant une structure identique ou des fonctions analogues seront désignés par des mêmes numéros de référence.

Dans la suite de la description, on adoptera à titre non limitatif des orientations :
- longitudinale indiquée par la flèche "L" et dirigée d'arrière en avant ;
- verticale indiquée par la flèche "V" et dirigée de bas en haut ;
- transversale indiquée par la flèche "T" et dirigée de gauche à droite.

De plus, les termes "axial" et "radial" seront utilisés en rapport avec l'axe "A".

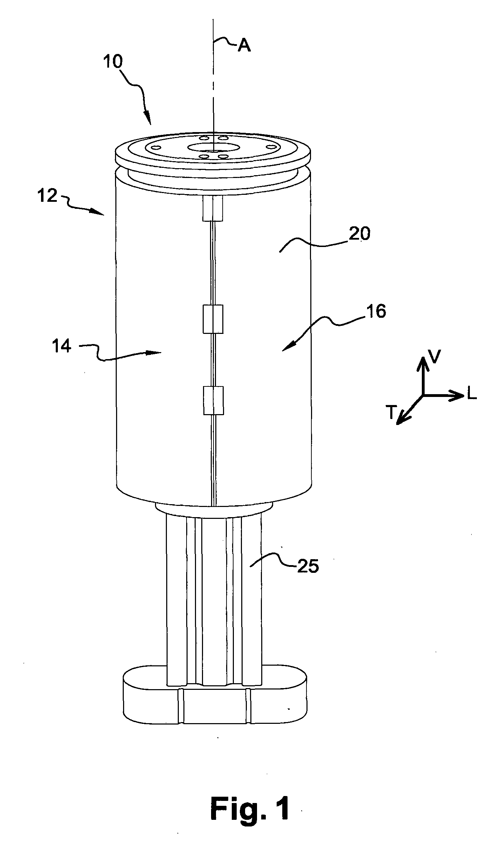

On a représenté à la figure 1 un dispositif 10 de fabrication de récipients par soufflage ou par étirage-soufflage. Ce dispositif 10 comprend un moule 12 formé par la jonction de deux demi-moules 14, 16 sensiblement symétriques réalisés dans un matériau métallique, par exemple en acier ou dans un alliage d'aluminium.

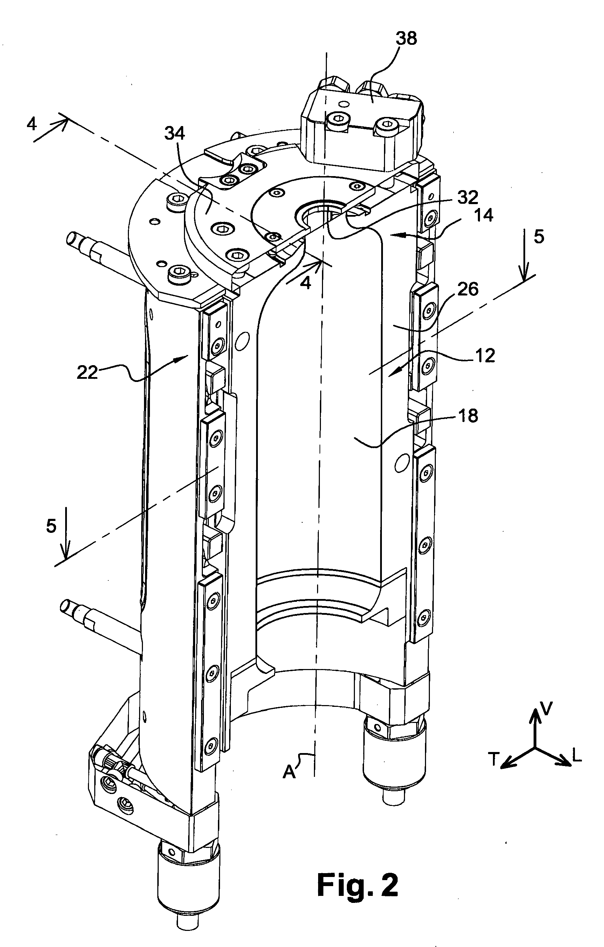

Le moule 12 ainsi assemblé présente globalement la forme d'un cylindre de révolution creux d'axe principale "A" vertical. Comme représenté à la figure 2, le moule 12 comporte une face interne qui délimite une cavité 18 de moulage qui débouche axialement vers le haut pour permettre le passage d'un col d'une préforme (non représentée). Le moule 12 est délimité radialement par une face 20 externe qui entoure la cavité 18 de moulage.

Chaque demi-moule 14, 16 est porté par un support 22, 24 associé.

Les demi-moules 14, 16 sont articulés le long d'une charnière (non représentée) d'axe verticale pour permettre l'ouverture du moule 12 en vue de l'introduction d'une préforme. Un fond 25 de moule, représenté à la figure 1 vient s'intercaler entre les deux demi-moules 14, 16 pour former le fond du récipient. La structure générale d'un tel moule 12, dénommé moule portefeuille, est décrite dans la demande de brevet français FR-A1-2.856.333 et dans la demande internationale correspondante WO-A1-05/002.820, toutes deux au nom de la demanderesse, auxquelles l'homme du métier pourra se référer.

Les deux demi-moules 14, 16 et leur support 22 étant sensiblement identiques, seul le demi-moule 14 et son support 22 seront décrits par la suite en référence aux figures 2 à 6, la description étant applicable par symétrie à l'autre demi-moule 16 et à son support 24.

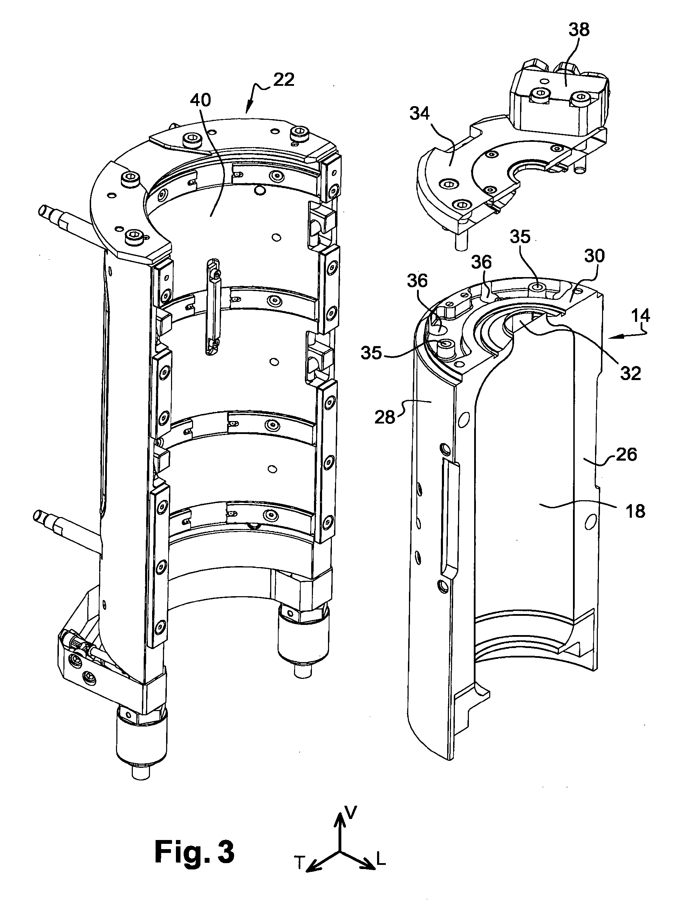

Le demi-moule 14 présente une forme semi-cylindrique. Il comporte ainsi une face 26 avant plane de jonction dans laquelle est formée une moitié de la cavité 18 de moulage, et une face 28 externe semi-cylindrique opposée formant une moitié de la face 20 externe du moule 12, comme illustré à la figure 3.

En se référant à nouveau à la figure 3, le demi-moule 14 présente aussi une face 30 supérieure en forme de demi-disque. Le bord rectiligne de face 30 supérieure comporte une échancrure 32 destinée à former un orifice de passage d'un col de la préforme à l'intérieur de la cavité 18.

Une platine 34 de forme complémentaire est fixée sur la face 30 supérieure du demi-moule 14. La face supérieure de la platine 34 forme une face d'appui pour une tuyère (non représentée) d'amenée d'air sous pression grâce auquel est réalisé le soufflage du récipient.

Le demi-moule 14 comporte des moyens commandés de chauffage du moule à une température déterminée. Plus précisément, les moyens de chauffage sont ici formés par des résistances 35 électriques chauffantes qui sont interposées dans l'épaisseur du demi-moule 14 entre la cavité 18 de moulage et la face 28 externe.

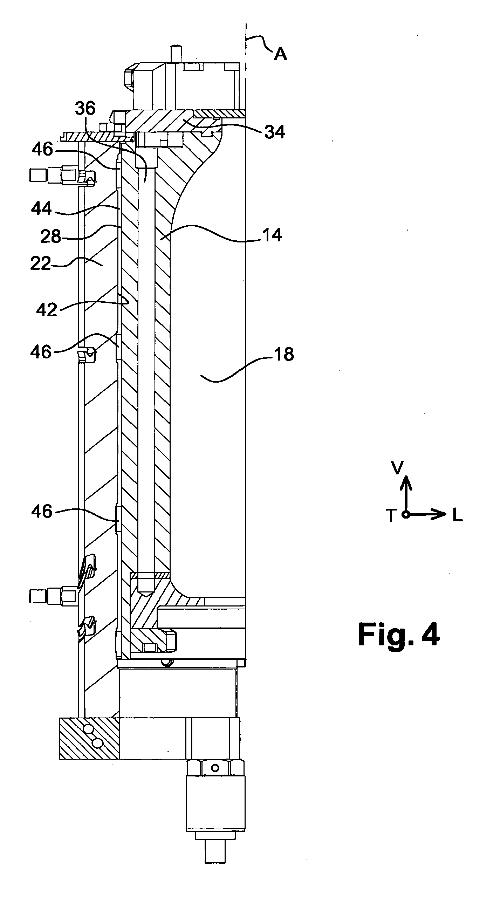

A cet effet, le demi-moule 14 comporte une pluralité d'orifices 36 verticaux qui débouchent vers le haut dans la face 30 supérieure du moule, comme cela est visible aux figures 3 et 4. Les résistances sont ainsi introduites dans les orifices 36. La platine 34 recouvre les orifices 36 afin d'y enfermer les résistances. Les résistances électriques sont alimentées en électricité par l'intermédiaire de fils électriques (non représentés) qui sont agencés en sandwich entre la platine 34 et la face 30 supérieure du demi-moule 14. Chaque fil est raccordé à un connecteur 38 qui est ici porté par la platine 34 pour permettre l'alimentation commandée en électricité des résistances chauffantes.

Le demi-moule 14 est reçu dans un logement 40 qui est réalisé dans une face avant du support 22 associé, comme représenté à la figure 3. Le logement 40 présente un fond 42 qui est tourné vers l'avant et qui présente une forme complémentaire de la face 28 externe du demi-moule 14. Le demi-moule 14 est destiné à être fixé de manière amovible dans le logement 40 du support 22 pour permette un changement de moule 12, notamment lorsque le fabricant désire changer le format ou la forme du récipient final.

La fixation amovible est réalisée par des moyens qui sont déjà bien connus. Un exemple de réalisation de tels moyens de fixation est décrit et représenté dans le document EP-B1-0.821.641.

Le demi-moule 14 doit être maintenu chaud. Pour éviter une perte de chaleur, comme représenté à la figure 4, il est connu de réserver un espace 44 libre entre le fond 42 du logement et la face 28 externe du demi-moule 14 en interposant des entretoises 46 entre le demi-moule 14 et le fond 42 du logement 40. Les entretoises 46 sont ici rapportées sur le fond 42 du logement 40.

Cet espace 44 est habituellement rempli d'air immobile formant une couche thermiquement isolante. Avantageusement, les entretoises 46 présente une surface de contact la plus faible possible avec la face 28 externe du demi-moule 14 pour minimiser les pertes de chaleur par conduction. Pour les mêmes raisons, les entretoises 46 sont avantageusement réalisées en un matériau thermiquement isolant.

L'espace 44 libre est réalisé en un seul tenant, c'est-à-dire que les entretoises 46 ne le divise pas en plusieurs parties séparées.

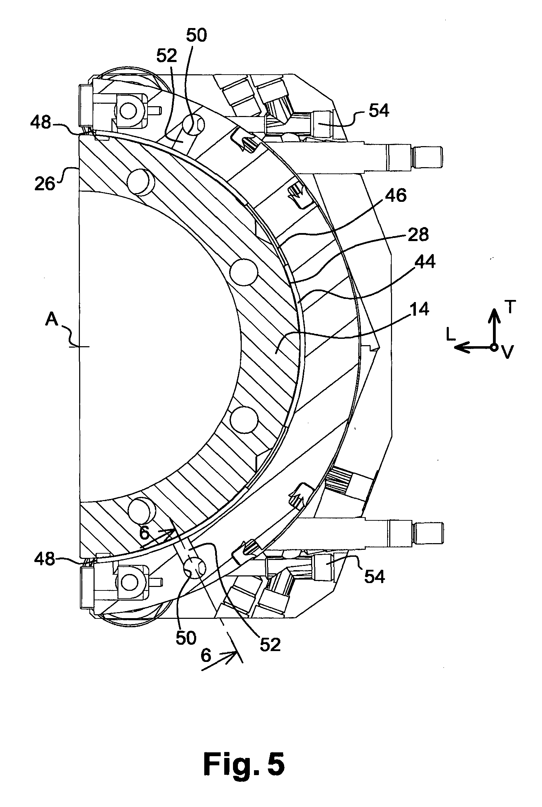

L'espace 44 libre n'est pas étanche, il est ainsi susceptible de communiquer avec l'extérieur, notamment par les interstices 48 avant formés entre les bords verticaux de la face 26 de jonction du demi-moule 14 et les bords verticaux du logement 40 comme représenté à la figure 5.

Lorsque les moyens de chauffage sont activés, ils chauffent le demi-moule 14 à une température trop élevée pour permettre sa manipulation à mains nues par un opérateur. La température du demi-moule 14 est par exemple supérieure à 100°C.

Lorsqu'il est nécessaire de manipuler les demi-moules 14, 16, il est donc préférable de désactiver les moyens de chauffage. Néanmoins, cette opération n'est pas suffisante car le refroidissement passif du demi-moule 14 est très lent.

L'invention propose donc un procédé de refroidissement actif du demi-moule 14. Ce procédé est mis en oeuvre après la désactivation des moyens de chauffage.

Selon ce procédé, le demi-moule 14 est refroidi par circulation d'un fluide caloporteur froid directement au contact de sa face 28 externe. Le fluide caloporteur circule ici dans l'espace 44 libre.

A cet effet, au moins une conduite 50 d'alimentation commandée en fluide caloporteur débouche directement dans l'espace 44 libre pour permettre la circulation du fluide caloporteur entre la face 28 externe du demi-moule 14 et le fond 42 du logement 40. Dans l'exemple représenté à la figure 5, le support 22 comporte deux conduites 50 d'alimentation parallèles.

Chaque conduite 50 d'alimentation s'étend ici verticalement dans l'épaisseur du support 22, parallèlement au fond 42 du logement 40. Chaque conduite 50 d'alimentation est agencée à proximité d'un bord latéral vertical du logement 40.

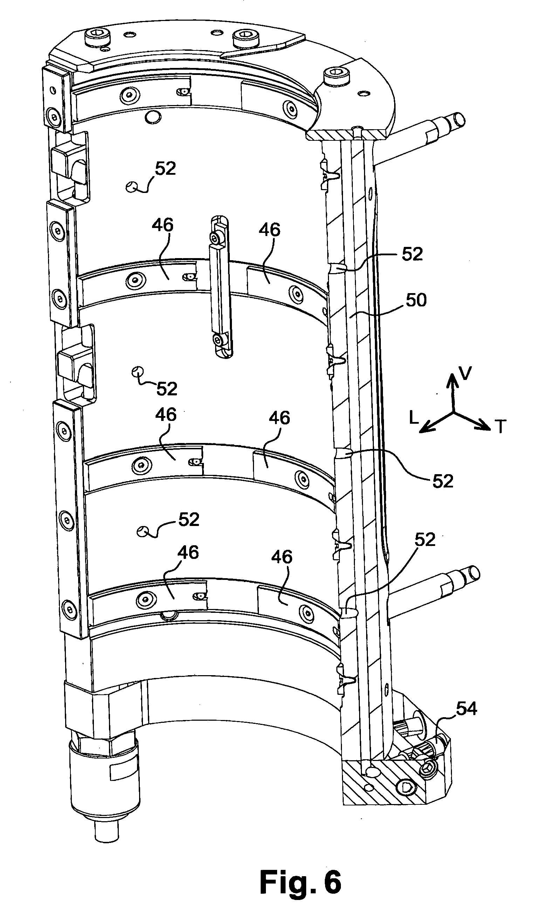

Chaque conduite 50 d'alimentation comporte au moins un orifice 52 débouchant dans le fond 42 du logement 40. Chaque conduite 50 d'alimentation comporte ici trois orifices 52 débouchant comme représenté à la figure 6. Les orifices 52 sont répartis régulièrement sur ledit fond 42 le long de l'axe vertical "A".

Chaque orifice 52 est ici agencé verticalement entre deux entretoises 46 de manière à permettre une répartition homogène du flux de fluide caloporteur malgré la présence des entretoises 46.

Chaque conduite 50 d'alimentation est raccordée à une source de fluide caloporteur par l'intermédiaire de moyens 54 de raccordement qui sont agencés à une extrémité inférieure du support 22.

Le fluide caloporteur est ici formé par un gaz sous pression qui est évacué vers l'atmosphère en passant à travers les interstices 48. Le gaz sous pression est ici de l'air comprimé, par exemple entre 8 bars et 40 bars

Les interstices 48 présentent une section de passage suffisante pour provoquer une détente du gaz sous pression pendant sa circulation contre la face 28 externe du demi-moule 14. Cette détente provoque une baisse de la température du gaz qui favorise un refroidissement rapide du demi-moule 14 par conduction de chaleur entre sa face 28 externe et le gaz.

Ceci permet d'évacuer rapidement la chaleur du demi-moule 14 vers l'atmosphère.

Le procédé est avantageusement mis en oeuvre avec les deux demi-moules 14, 16 écartés l'un de l'autre pour permettre une évacuation du fluide caloporteur avec un débit maximal.

Le dispositif et son procédé de mise en oeuvre permettent ainsi de refroidir efficacement des moules 12 chaud. Par exemple, en utilisant de l'air comprimé à 8,5 bars comme fluide caloporteur, il est possible de refroidir plusieurs moules 12 en moins de 15 minutes pour un coût très faible du fait de la relativement faible pression du fluide caloporteur.

En augmentant la pression du fluide caloporteur, il est bien entendu possible de raccourcir encore le temps de refroidissement des moules 12. En effet, cela permet de d'augmenter le débit de fluide caloporteur et d'obtenir un fluide caloporteur très froid du fait de sa forte détente.

En outre, la face 28 externe du demi-moule 14 présente une aire plus grande que la face interne de la cavité 18. Ainsi, en faisant circuler le fluide caloporteur contre la face 28 externe du demi-moule 14, on bénéficie d'une surface de contact plus importante entre le fluide caloporteur et le demi-moule 14. L'évacuation de la chaleur par conduction est ainsi plus importante qu'en faisant circuler un fluide caloporteur à l'intérieur de la cavité 18 de moulage.

## Revendications

1. Procédé de refroidissement d'un moule (12, 14, 16) chauffé d'un dispositif (10) de moulage de récipients en matériau thermoplastique par soufflage, le dispositif comportant :
- un moule (12, 14, 16) présentant une face interne qui délimite une cavité (18) de moulage et qui comporte une face (20, 28) externe qui entoure la cavité (18) de moulage ;
- des moyens de chauffage du moule à une température déterminée qui sont désactivés lors de la mise en oeuvre du procédé de refroidissement ;
**caractérisé en ce que** le moule (12, 14, 16) est refroidi par circulation d'un fluide caloporteur froid directement au contact de sa face (20, 28) externe.

2. Procédé selon la revendication précédente, **caractérisé en ce que** le fluide caloporteur est formé par un gaz sous pression qui subit une détente en circulant contre la face (20, 28) externe du moule (12, 14, 16).

3. Procédé selon l'une quelconque des revendications précédentes, **caractérisé en ce que** les moyens de chauffage sont formés par des résistances électriques qui sont interposées dans l'épaisseur du moule (12, 14, 16) entre la cavité (18) de moulage et la face (20, 28) externe.

4. Dispositif (10) de moulage pour la mise en oeuvre du procédé selon l'une quelconque des revendications 1 à 3, dans lequel :
- le moule (12) est formé par la jonction de deux demi-moules (14, 16) comportant chacun une face (26) de jonction dans laquelle est formée une partie de la cavité (18) de moulage, et une face (28) externe opposée formant une partie de la face (20) externe du moule (12) ;
- chaque demi-moule (14, 16) est fixé dans un logement (40) d'un support (22, 24) associé avec réservation d'un espace (44) libre entre le fond (42) du logement (40) et la face (28) externe du demi-moule (14, 16) ;
**caractérisé en ce que** le dispositif (10) de moulage comporte au moins une conduite (50) d'alimentation commandée en fluide caloporteur qui débouche dans l'espace (44) libre pour permettre la circulation du fluide caloporteur entre la face (28) externe du demi-moule (14, 16) et le fond (42) du logement (40).

5. Dispositif (10) selon la revendication précédente, **caractérisé en ce que** l'espace (44) libre est ouvert sur l'atmosphère de manière à permettre l'évacuation du fluide caloporteur.

6. Dispositif (10) selon l'une quelconque des revendications 4 ou 5, **caractérisé en ce que** la conduite (50) d'alimentation débouche dans le fond (42) du logement (40).

7. Dispositif (10) selon la revendication précédente, **caractérisé en ce que** la conduite (50) d'alimentation comporte plusieurs orifices (52) débouchant dans le fond (42) du logement (40), les orifices (52) étant répartis sur ledit fond (42).

8. Dispositif (10) selon l'une quelconque des revendications 6 ou 7, **caractérisé en ce que** la conduite (50) d'alimentation est réalisée dans l'épaisseur du support (22).

## Patentansprüche

1. Abkühlungsverfahren einer Form (12, 14, 16), die von einer Vorrichtung (10) zur Formung von Behältern aus thermoplastischem Material durch Blasformen erwärmt ist, wobei die Vorrichtung umfasst:
- eine Form (12, 14, 16), die eine Innenseite aufweist, die einen Formungshohlraum (18) begrenzt, und die eine Außenseite (20, 28) umfasst, die den Formungshohlraum (18) umgibt;
- Mittel zur Erwärmung der Form auf eine bestimmte Temperatur, die beim Einsatz des Abkühlungsverfahrens deaktiviert sind;
**dadurch gekennzeichnet, dass** die Form (12, 14, 16) durch Zirkulation einer kalten Wärmeübertragungsflüssigkeit, die direkt mit ihrer Außenseite (20, 28) in Kontakt ist, abgekühlt wird.

2. Verfahren nach dem vorhergehenden Anspruch, **dadurch gekennzeichnet, dass** die Wärmeübertragungsflüssigkeit von einem Druckgas gebildet ist, das einer Druckminderung unterzogen wird, indem es gegen die Außenseite (20, 28) der Form (12, 14, 16) zirkuliert.

3. Verfahren nach einem der vorhergehenden Ansprüche, **dadurch gekennzeichnet, dass** die Erwärmungsmittel von elektrischen Widerständen gebildet sind, die in der Dicke der Form (12, 14, 16) zwischen dem Formungshohlraum (18) und der Außenseite (20, 28) angeordnet sind.

4. Formungsvorrichtung (10) für den Einsatz des Verfahrens nach einem der Ansprüche 1 bis 3, bei der:
- die Form (12) durch die Verbindung von zwei Halbformen (14, 16) gebildet ist, jeweils umfassend eine Verbindungsseite (26), in der ein Teil des Formungshohlraums (18) ausgebildet ist, und eine gegenüberliegende Außenseite (28), die einen Teil der Außenseite (20) der Form (12) bildet;
- jede Halbform (14, 16) in einer Lagerung (40) einer Stütze (22, 24) befestigt ist, die unter Freihaltung eines Freiraums (44) zwischen dem Boden (42) der Lagerung (40) und der Außenseite (28) der Halbform (14, 16) verbunden ist;
**dadurch gekennzeichnet, dass** die Formungsvorrichtung (10) mindestens eine gesteuerte Versorgungsleitung (50) mit Wärmeübertragungsflüssigkeit umfasst, die in den Freiraum (44) mündet, um die Zirkulation der Wärmeübertragungsflüssigkeit zwischen der Außenseite (28) der Halbform (14, 16) und dem Boden (42) der Lagerung (40) zu ermöglichen.

5. Vorrichtung (10) nach dem vorhergehenden Anspruch, **dadurch gekennzeichnet, dass** der Freiraum (44) zur Atmosphäre hin offen ist, um die Ableitung der Wärmeübertragungsflüssigkeit zu ermöglichen.

6. Vorrichtung (10) nach einem der Ansprüche 4 oder 5, **dadurch gekennzeichnet, dass** die Versorgungsleitung (50) in den Boden (42) der Lagerung (40) mündet.

7. Vorrichtung (10) nach dem vorhergehenden Anspruch, **dadurch gekennzeichnet, dass** die Versorgungsleitung (50) mehrere Öffnungen (52) umfasst, die in den Boden (42) der Lagerung (40) münden, wobei die Öffnungen (52) auf dem Boden (42) verteilt sind.

8. Vorrichtung (10) nach einem der Ansprüche 6 oder 7, **dadurch gekennzeichnet, dass** die Versorgungsleitung (50) in der Dicke der Stütze (22) hergestellt ist.

## Claims

1. Method for cooling a heated mould (12, 14, 16) of a device (10) for blow-moulding thermoplastic containers, the device comprising:
- a mould (12, 14, 16) having an internal face which delimits a moulding cavity (18) and which comprises an external face (20, 28) which surrounds the moulding cavity (18);
- heating means for heating the mould to a determined temperature and which are deactivated when the cooling method is implemented;
**characterized in that** the mould (12, 14, 16) is cooled by circulating a heat-transfer fluid directly in contact with the external face (20, 28) thereof.

2. Method according to the preceding claim, **characterized in that** the heat-transfer fluid is formed of a pressurized gas which underdoes an expansion as it circulates against the external face (20, 28) of the mould (12, 14, 16).

3. Method according to any one of the preceding claims, **characterized in that** the heating means are formed by electrical resistances which are interposed in the thickness of the mould (12, 14, 16) between the moulding cavity (18) and the external face (20, 28).

4. Moulding device (10) for implementing the method according to any one of Claims 1 to 3, in which:
- the mould (12) is formed by the union of two half-moulds (14, 16) each comprising a union face (26) in which part of the moulding cavity (18) is formed and an opposite external face (28) that forms part of the external face (20) of the mould (12);
- each half-mould (14, 16) is fixed in a housing (40) of an associated support (22, 24) with an empty space (44) reserved between the bottom (42) of the housing (40) and the external face (28) of the half-mould (14, 16);
**characterized in that** the moulding device (10) comprises at least one controlled heat-transfer fluid feed duct (50) which opens into the empty space (44) to allow the heat-transfer fluid to circulate between the external face (28) of the half-mould (14, 16) and the bottom (42) of the housing (40).

5. Device (10) according to the preceding claim, **characterized in that** the empty space (44) is open to the atmosphere to allow the heat-transfer fluid to be discharged.

6. Device (10) according to either one of Claims 4 and 5, **characterized in that** the feed duct (50) opens into the bottom (42) of the housing (40).

7. Device (10) according to the preceding claim, **characterized in that** the feed duct (50) comprises several orifices (52) opening into the bottom (42) of the housing (40), the orifices (52) being distributed over the said bottom (42).

8. Device (10) according to either one of Claims 6 and 7, **characterized in that** the feed duct (50) is produced in the thickness of the support (22).
